Europäisches Patentamt

(19) European Patent Office  (11) Publication number: **0 116 733**
**B1**
Office européen des brevets

(12) **EUROPEAN PATENT SPECIFICATION**

(45) Date of publication of patent specification: **07.12.88**  (51) Int. Cl.⁴: **B 60 B 15/12**

(21) Application number: **83300718.0**

(22) Date of filing: **14.02.83**

(54) **Improvements in or relating to grip wheels comprising strakes.**

(43) Date of publication of application:
**29.08.84 Bulletin 84/35**

(45) Publication of the grant of the patent:
**07.12.88 Bulletin 88/49**

(84) Designated Contracting States:
**AT BE CH DE FR IT LI LU NL SE**

(56) References cited:
**DE-C- 338 111**
**FR-A- 540 507**
**FR-A- 987 113**
**GB-A- 1 717**
**GB-A- 230 341**
**GB-A-2 108 441**
**US-A-1 741 065**
**US-A-2 162 643**
**US-A-3 174 804**

(73) Proprietor: **Gripwhweel Limited**
**Beaucourt Mottram-St-Andrew**
**Nr. Macclesfield Cheshire (GB)**

(72) Inventor: **Gething, Robert**
**Beaucourt Mottram-St-Andrew**
**Nr. Macclesfield Cheshire (GB)**

(74) Representative: **Massey, Alexander et al**
**MARKS & CLERK Suite 301 Sunlight House Quay Street**
**Manchester, M3 3JY (GB)**

Courier Press, Leamington Spa, England.

## Description

The present invention relates to grip wheels and in particular to grip wheels each comprising a frame, a plurality of strakes and means for selectively extending or withdrawing said strakes relative to the edge of the grip wheel frame.

Where vehicles, such as farm tractors, JCBs etc. have to travel over soft slippery surfaces, such as mud, a great deal of the motive power can be lost as a result of slipping of the vehicle drive wheels on the slippery surface. In order to overcome this problem it is known to attach to the vehicle drive wheels grip wheels comprising a plurality of strakes which are disposed around the circumference of the grip wheels and which extend past the outer edge of the vehicle wheels to engage in the soft slippery surface over which the vehicle is travelling, thus increasing the traction of the vehicle over the slippery surface.

In its simplest form the grip wheel comprises a plurality of strakes which are rigidly fixed around a wheel which can be attached to the drive wheel of a vehicle. This arrangement has, however, a number of disadvantages, the most significant of which is that the grip wheels must be removed from the vehicle wheels before the vehicle can drive off the soft slippery surface onto a hard surface, like, for example, a road. This obviously wastes a lot of time and means that vehicle downtime can be significant.

British Patent Specification No. GB—A—1717 (A.D. 1913) discloses a grip wheel comprising a number of strakes pivotally connected to a movable member the position of which can be adjusted in the vertical direction so as to control the extent of the projection of the strakes beyond the wheel rim. Raising the movable member lifts the strakes out of contact with the ground surface on which the wheel rim is supported. Such a structure could only be mounted on the outside of a normal tyred vehicle wheel however if the movable member was supported on a fixed axle of the vehicle. Such an arrangement could not be simply fitted on a conventional wheel and axle assembly.

It is an object of the present invention to provide a grip wheel comprising a plurality of strakes in which the above mentioned problems are obviated or mitigated.

According to the present invention there is provided a grip wheel comprising a frame, a plurality of strakes, means for selectively extending and withdrawing said strakes relative to the edge of the grip wheel frame, and means for connecting the grip wheel to a vehicle such that the centre of rotation of the grip wheel frame lies over the centre of rotation of a vehicle axle, said means for selectively extending and withdrawing said strakes comprising a central member to which the strakes are rotatably connected, the central member being movable relative to the centre of rotation of the grip wheel frame to provide a centre of rotation of the strakes which is offset from the centre of rotation of the grip wheel frame, characterised in that the central member is mounted on and is movable relative to a member supported on rollers bearing against an annular surface defined by the grip wheel frame, and means are provided to prevent the member rotating with the grip wheel.

Preferably, means are provided for securing the grip wheel to either a wheel mounted on the vehicle or the axle of the vehicle.

Preferably, where the grip wheel is secured to the wheel of a vehicle the central member is movable in a vertical plane relative to the grip wheel frame, the central member being movable vertically downwards to a position in which the strakes extend beyond the edge of the vehicle wheel at the bottom thereof and being movable vertically upwards to a position in which the strakes are withdrawn past the edge of the vehicle wheel at the bottom thereof.

Preferably, where the grip wheel is secured directly to an axle of the vehicle the central member is movable in a vertical plane relative to the grip wheel frame, the central member being movable vertically downwards to a position in which the strakes extend beyond the edge of the grip wheel frame at the bottom thereof and being movable vertically upwards to a position in which the strakes are withdrawn past the edge of the grip wheel frame at the bottom thereof.

Preferably, where the vehicle runs on the grip wheel frame the grip wheel frame is provided with a tyre to provide resistance to shock.

The central member may be moved by means of a hydraulic piston, a pneumatic piston, an electric motor or any other suitable motive means.

Preferably, motive means are provided for controlling the movement of the central member, the motive means being connected to a motive means operating supply external to the grip wheel by connecting means, which connecting means is provided with a swiveling connection mounted at the centre of the grip wheel, to enable the motive means to rotate with the grip wheel frame in the event of it becoming jammed, without damaging the said connecting means.

Preferably, the connecting means comprises a tube through which the supply line to the motive means is carried.

Preferably, the member supported on rollers is a multi-armed member, the rollers being supported by respective arms of the multi-arm member.

Preferably, each strake is connected to a linking member which is rotatably connected to the central member, a knuckle joint being provided between each strake and its respective linking member.

Preferably, each knuckle joint comprises a shear pin to protect the grip wheel against excessive forces on the strake.

Preferably, the means for securing the grip wheel to the vehicle wheel or axle comprises a bolt assembly.

Preferably, each strake is slidably supported in a channel member of the grip wheel frame.

Preferably means are provided for transmitting torque forces on the strakes away from the central member to the means for connecting the grip wheel to the vehicle wheel.

An embodiment of the present invention will now be described, by way of example, with reference to the accompanying drawings in which:—

Fig. 1 shows a front view of a grip wheel embodying the present invention attached to a vehicle wheel; and

Fig. 2 shows a section of the grip wheel of Fig. 1 along lines I—I.

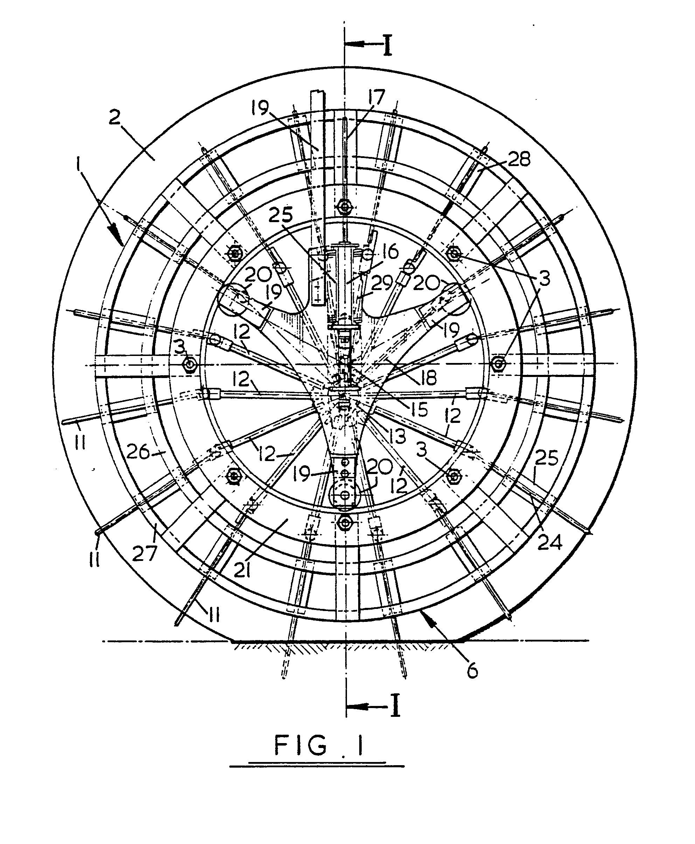

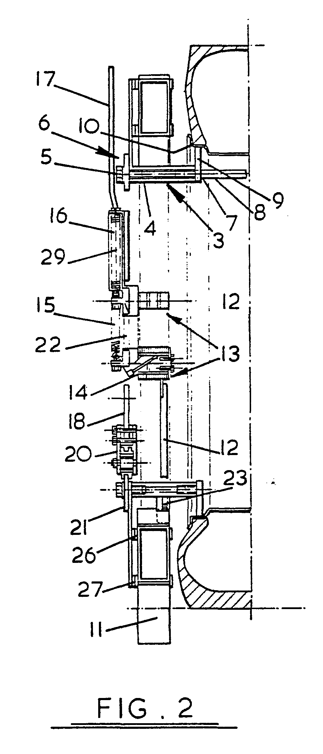

Referring to Figs. 1 and 2 the grip wheel 1 is attached to the wheel 2 of a vehicle (not shown) by means of bolt assemblies 3.

Each bolt assembly 3 comprises a screw shackle 4, into one end of which a bolt 5 engages to secure the said end of the screw shackle 4 to the grip wheel frame 6, and into the other end of which the end 7 of a bolt 8 engages. Before engaging in the screw shackle 4 the bolt 8 passes through a lug on the wheel rim and through the wheel dish which are both secured onto the bolt 8 by means of a nut (not shown). Thus, the grip wheel is attached to the vehicle wheel. To prevent movement of the grip wheel 1 on the ends of the bolts 8 a tensioning plate 9 is provided between the rim 10 of the vehicle wheel hub and the bolt 8. As the screw shackle 4 is screwed onto the bolt 8 the tensioning plate 9 is tightened between the slightly sloping rim 10 and the bolt 8, thus ensuring that forces on the grip wheel 1 are transmitted to the vehicle wheel hub and not to the bolts 8.

The bolt assembly 3 provides a particularly advantageous means of securing the grip wheel 1 to the vehicle wheel 2. The length of the end 7 of bolt 8 engaging in the screw shackle 4 can be adjusted according to the different wheel rim widths which may be chosen. This enables different wheel rim widths to be coped with easily, which is of particular importance in agricultural vehicles where the wheel rim width varies for particular types of crops.

In addition the grip wheel can easily be secured to existing parts of the vehicles wheel.

In the prior art specially provided lugs have to be welded to the vehicle wheel to enable the grip wheel to be attached.

Where the distance betwen the grip wheel and the wheel dish is very great the nut securing the wheel rim and dish together can be replaced by an eye-nut into which a hook at the end of a threaded rod engaging in the screw shackle is hooked. The bolt 8 is replaced by a short bolt which only engages in the eye nut to secure the rim and dish together. This arrangement provides a greater degree of movement of the threaded portions engaging in the screw shackle, than in the previous arrangement, thus making alignment of the screw shackles with the threaded portions easier.

As an alternative to the bolt assembly 3, a more simple arrangement of a single bolt engaging with the grip wheel and the vehicle wheel to secure one to the other may be provided. So that the distance between the grip wheel and the vehicle wheel can be adjusted to allow for different wheel rim widths spacers can be provided on the bolt between the grip wheel and the vehicle wheel. In addition, a tensioning plate can be tightened into position against the rim of the vehicle wheel by the bolts to ensure that forces on the bolts are transmitted to the vehicle wheel.

The grip wheel 1 comprises a plurality of strakes 11 which are equidistantly spaced around the circumference of the grip wheel frame 6. Each strake 11 is connected through a linkage member 12 to a central bearing 13. Each linkage member 12 is connected to the central bearing 13 through respective rotatable members 14.

In turn the central bearing 13 is connected to the piston rod 15 of a hydraulic piston 16, which is connected to a hydraulic supply (now shown) by means of a pipe 17. The hydraulic piston 16 is secured to a star shaped member 18, the points 19 of which, engage through rollers 20 with the inside ring 21 of the grip wheel frame 6. A bar 19a, secured to a fixed part of the body of the vehicle, for example the mudguard, fixes the star shaped member 18 in position, whilst the rollers 20 enable the grip wheel frame 6 to move relative to the fixed star shaped member 18. In this way the positions of the hydraulic piston 16 and of the central bearing 13 are fixed relative to the centre of rotation of the grip wheel frame 6 and are prevented from being twisted out of position by forces transmitted from the strakes 11 to the central bearing 13. A slot 22 is provided in the star shaped member 18 through which the central bearing 13 connects to the piston rod 15 of the hydraulic piston 16.

In order to prevent excessive forces being absorbed solely in the piston rod 15 the hydraulic piston 16 is povitable about a pivot 22a. This enables the connecting member between the central bearing 13 and the piston rod 15 to come in contact with the sides of the slit 22 when there is twisting force on the piston rod 15. The twisting forces are thus absorbed in the star shaped member 18.

It will be appreciated that the bar 19a may be replaced by a hollow tube through which the hydraulic supply pipe 17 is run for protection.

It will further be appreciated that in order to protect the supply pipe 17, to the hydraulic piston 16, from being damaged in the event that the star shaped member 18 jams in the grip wheel frame 6 the supply pipe 17 may be provided with a swivel connection mounted at the centre of rotation of the grip wheel frame 6. In the event that the star shaped member 18 jams in the grip wheel frame 6, the connection to the hydraulic piston 16, carried by the star shaped member 18, will simply rotate about the swivel connection. So that the star shaped member 18 can rotate with the grip wheel frame 6 a shear pin is preferably provided to secure the bar 19a to, for example, the mudguard. When the star shaped member 18 jams the shear pin will shear, thus preventing the bar 19a from being damaged.

By operating the hydraulic piston 16 the central bearing 13 can be moved up and down in the slot 22 provided in the star shaped member 18 to occupy positions between the top and bottom of the centre of rotation of the grip wheel frame 6.

As previously mentioned each strake 11 is connected to the central bearing 13 through a linkage member 12. Between each strake 11 and its linkage member 12 provided a knuckle joint 23 which allows the central bearing 13 and the linkage members 12 to move relative to the strakes 11. Each knuckle joint 23 comprises a shear pin which shears in the event of its respective strake 11 hitting a hard object in the ground, thus preventing damage to the grip wheel 1 as a whole. The strakes 11, linkage member 12 and knuckle joints 23 are all identical individual components, however each component may be connected to the next in one of two ways by rotating it through 180° to the component it is to be connected to. In addition each linkage member 12 can be connected to its respective rotatable member 14 on the central bearing 13 in one of two possible positions. In this way it is possible to derive sixteen different positions at which each linkage member 12 can be connected to the central bearing 13.

Each strake 11 is movable in and out of a channel 24 provided in grip wheel frame members 25 connected between the middle and outer rings 26 and 27 respectively of the grip wheel frame. Strictly speaking the strakes need only be secured in position relative to the edge of the grip wheel frame, but the arrangement of rings 26 and 27 and the frame members 25 ensures that torque forces on the strake when it is engaged in the ground are largely distributed away from the central bearing 13 to the bolt assemblies 3 through frame members 28.

It will be appreciated that when the hydraulic piston 16 is operated, the central bearing 13 is moved downwards in the slot 22. Since the central bearing 13 represents the centre of rotation of the strakes 11 the distance by which the central bearing 13 is moved is the distance by which the strakes 11 are withdrawn at the top of the grip wheel frame 6 and extended at the bottom of the grip wheel frame 6. From this it will be realised that as the central bearing 13 is moved further downwards in the slot 22 the strakes 11 can be made to extend progressively further from the bottom of the grip wheel frame 6 and become further withdrawn into the channels 24 at the top of the grip wheel frame 6. Further, since the central bearing 13 represents the centre of rotation of the strakes 11 those strakes 11 rotated to the bottom of the grip wheel 1 are extended beyond the edge of the grip wheel frame 6, whilst those strakes 11 rotated to the top of the grip wheel 1 are withdrawn into the channels 24 of the grip wheel frame members 25. Those strakes 11 in between top and bottom positions of the grip wheel 1 are in progressively decreasing or increasing stages of extension as they approach the bottom of the grip wheel 1 depending upon whether the central bearing 13 is above or below the centre of rotation of the grip wheel frame 6. When the hydraulic piston 16 is switched off, springs 29 withdraw the piston rod 15 into the hydraulic cylinder 16 causing the central bearing 13 to be moved above the centre of rotation of the grip wheel frame 6. As a result the strakes 11 become progressively extended as they rotate from the bottom of the grip wheel 1 to the top. By suitable adjustment of the positions to which the central bearing 13 is moved about the centre of rotation of the grip wheel frame 6, it can be ensured that the strakes 11 only extend beyond the outer edge of the vehicle wheel 2 at the top or bottom of the grip wheel 1.

It will be appreciated that in the embodiment of the present invention of Figs. 1 and 2 where the central bearing is moved between positions above and below the centre of rotation of the grip wheel frame 6 the extension and withdrawal of each strake 11, out of and into channels 24, as the grip wheel 1 rotates acts to clean each strake 11 of mud which might adhere to it as it leaves the ground. The efficiency of the grip wheel 1 in maintaining traction of the vehicle is thus not decreased by a build up of mud on the strakes 11.

In addition, because each strake only extends fully beyond the edge of the vehicle wheel at the top or bottom positions there is no interference caused by the strakes to accessories towed behind the vehicle or to the driver when moving about in front of the vehicle wheel.

It will also be appreciated that the strakes may be extended whilst the vehicle is moving because of the hydraulically operated system.

Further, because the strakes extend fully into the ground gradually the amount of rolling resistance and shock to the vehicle is considerably reduced compared to the prior art.

The distance by which the strakes extend beyond the edge of the grip wheel frame is determined by the distance through which the central bearing 13 is moved and the length of the strakes 11. In view of this it will be appreciated that where desired the central bearing 13 need only be moved through the distance which the strakes 11 extend past the edge of the vehicle wheel to ensure that the strakes 11 do not engage with the ground.

It will be appreciated that where a four wheel drive vehicle is used grip wheels are attached to each of the four drive wheels. Where this is the case chains may be connected between the star shaped member 18 of each wheel thereby keeping the hydraulic piston 16 stationary and replacing the bar 19a.

It will further be appreciated that the hydraulic piston for moving the central bearing may be replaced by a pneumatic piston, an electrical motor or any other convenient means.

It will still further be appreciated that whilst in the drawings the ends of the strakes are shown secured in the base of the knuckle joints, preferably the strakes are secured against the knuckle joints so that in the event of an excessive force being received by a strake the shear pin therein can easily shear. This may be achieved by securing the strake to the opposite side of the knuckle joint as viewed in Fig. 1.

Finally it will be appreciated that the grip wheel of the present invention is not limited to being attached to the wheel of a vehicle. The grip wheel may in fact be secured directly to the axle of the vehicle. An example of an arrangement where this is appropriate is the case of a seed or tuber drilling trailer. In such trailers the rate at which the wheels go round determines the rate at which seeds are dispensed from the drilling trailer. Where these trailers are used in wet conditions the wheels can slip which results in uneven distribution of seeds. By providing appropriate means for securing the grip wheel to the axle of the trailer the grip wheel forms an ideal replacement to the ordinary wheel of the trailer.

## Claims

1. A grip wheel (1) comprising a frame (6), a plurality of strakes (11), means for selectively extending and withdrawing said strakes (11) relative to the edge of the grip wheel frame (6), and means (3) for connecting the grip wheel (1) to a vehicle such that the centre of rotation of the grip wheel frame (6) lies over the centre of rotation of a vehicle axle, said means for selectively extending and withdrawing said strakes (11) comprising a central member (13) to which the strakes (11) are rotatably connected, the central member (13) being movable relative to the centre of rotation of the grip wheel frame (6) to provide a centre of rotation of the strakes (11) which is offset from the centre of rotation of the grip wheel frame (6), characterised in that the central member (13) is mounted on and is movable relative to a member (18) supported on rollers (20) bearing against an annular surface defined by the grip wheel frame, and means are provided to prevent the member (18) rotating with the grip wheel.

2. A grip wheel according to claim 1, characterised in that means (3) are provided for securing the grip wheel (1) to a wheel secured to the axle of the vehicle.

3. A grip wheel according to claim 2, characterised in that the central member (13) is movable in a vertical plane relative to the grip wheel frame (6), the central member (13) being movable vertically downwards to a position in which the strakes (11) extend beyond the edge of the vehicle wheel at the bottom thereof and being movable vertically upwards to a position in which the strakes (11) are withdrawn past the edge of the vehicle wheel at the bottom thereof.

4. A grip wheel according to claim 3, characterised in that the central member (13) is movable vertically upwards to a position in which the strakes (11) at the bottom of the grip wheel frame are withdrawn to the edge thereof.

5. A grip wheel according to claim 2, 3 or 4, characterised in that the means (3) for securing the grip wheel to the vehicle wheel comprises a bolt assembly (4, 5, 8 and 9).

6. A grip wheel according to claim 5, characterised in that the bolt assembly comprises a screw shackle (4) into one end of which a bolt (5) engages to secure the grip wheel frame (6) thereto and into the other end of which the threaded portion of a rod engaging with the vehicle wheel hub engages to secure the grip wheel frame to the vehicle wheel.

7. A grip wheel according to claim 6, characterised in that the amount of the threaded portion of the said rod (8) engaging in the screw shackle (4) is adjustable to enable the distance between the grip wheel (1) and the wheel hub to be adjusted to different wheel rim widths.

8. A grip wheel according to claim 6 or 7, characterised in that a tensioning plate (9) is tightened into position between the said rod (8) and the rim (10) of the vehicle wheel to transmit forces in the grip wheel (1) to the vehicle wheel.

9. A grip wheel according to claim 5 characterised in that the bolt assembly (4, 5, 8 and 9) comprises a bolt which engages with the vehicle wheel hub and the grip wheel frame (6) to secure one to the other, and that spacers are provided along the length of the bolt to enable the distance between the grip wheel and the wheel hub to be adjusted to different wheel rim widths.

10. A grip wheel according to claim 9 characterised in that a tensiong plate (9) is tightened into position against the rim (10) of the vehicle wheel by the bolts to transmit forces in the bolts to the vehicle wheel.

11. A grip wheel according to claim 1, characterised in that means are provided for securing the grip wheel frame (6) to the axle of the vehicle such that the frame acts as a wheel on which the vehicle runs.

12. A grip wheel according to claim 11, characterised in that the central member (13) is movable in a vertical plane relative to the grip wheel frame (6), the central member (13) being movable vertically downwards to a position in which the strakes (11) extend beyond the edge of the grip wheel frame (6) at the bottom thereof and being movable vertically upwards to a position in which the strakes (11) are withdrawn past the edge of the grip wheel frame (6) at the bottom thereof.

13. A grip wheel according to claim 11 or 12 characterised in that the grip wheel frame (6) is provided with a tyre to provide resistance to shock.

14. A grip wheel according to any preceding claim, characterised in that the grip wheel frame (6) comprises means (25, 26 and 27) for transmitting torque forces on the strakes (11) away from the central bearing (13) to the means (3) for connecting the grip wheel (1) to the vehicle.

15. A grip wheel according to any preceding claim, characterised in that the member (18) supported on rollers (20) is a multi-armed member, the rollers (20) being supported by respective arms (19) of the multi-arm member.

16. A grip wheel according to claim 15, characterised in that the multi-armed member (18) is prevented from rotating with the grip wheel frame (6) by means of a tie rod (19a) attached between the multi-armed member (18) and a stationary part of the vehicle.

17. A grip wheel according to claim 16, characterised in that a shear pin connects the tie rod (19a) to the stationary part of the vehicle or to the multi-armed member, which shear pin can shear in the event of the multi-armed member becoming jammed and thus forced to move with the grip wheel frame.

18. A grip wheel according to claim 17, characterised in that motive means (16) are provided for controlling the movement of the central member, the motive means (16) being connected to a motive means operating supply external to the grip wheel (1) by connecting means, which connecting means is provided with a swiveling connection mounted at the centre of the grip wheel (1), to enable the motive means to rotate with the grip wheel frame (6) in the event of it becoming jammed, without damaging the said connecting means.

19. A grip wheel according to claim 16, 17 or 18, characterised in that the connecting means comprises a tube through which the supply to the motive means is carried.

20. A grip wheel according to any preceding claim, characterised in that each strake (11) is connected to a linking member (12), which is rotatably connected to the central member (13), a knuckle joint (23) being provided between each strake (11) and its respective linking member (12).

21. A grip wheel according to claim 20, characterised in that each knuckle joint (23) comprises a shear pin to protect the grip wheel (1) against excessive forces on the strake (11).

22. A grip wheel according to any preceding claim, characterised in that each strake (11) is slidably supported in a channel member (24) of the grip wheel frame (6).

23. A grip wheel according to any preceding claim, characterised in that the central member (13) is moved by means of a hydraulic piston (16).

**Patentansprüche**

1. Zugrad (1), umfassend einen Rahmen (6), eine Vielzahl von Greifern (11), eine Einrichtung zum selektiven Ausfahren und Zurückziehen der Greifer (11) relativ zur Kante des Zugradrahmens (6) sowie eine Einrichtung (3) zur Verbindung des Zugrades (1) mit einem Fahrzeug, derart, daß das Rotationszentrum des Zugradrahmens (6) über dem Rotationszentrum einer Fahrzeugachse liegt, wobei die Einrichtung zum selektiven Ausfahren und Zurückziehen der Greifer (11) ein Mittelstück (13) aufweist, mit dem die Greifer (11) drehbar verbunden sind, wobei das Mittelstück (13) relativ zum Rotationszentrum des Zugradrahmens (6) bewegbar ist, um ein Rotationszentrum der Greifer (11) zu bilden, das gegenüber dem Rotationszentrum des Zugradrahmens (6) versetzt ist, dadurch gekennzeichnet, daß das Mittelstück (13) an einem Teil (18) montiert und relativ zu diesem bewegbar ist, das auf Rollen (20) gelagert ist, die gegen eine von dem Zugradrahmen gebildete ringförmige Oberfläche anliegen, und daß eine Einrichtung vorgesehen ist, um das Teil (18) daran zu hindern, sich mit dem Zugrad zu drehen.

2. Zugrad nach Anspruch 1, dadurch gekennzeichnet, daß eine Einrichtung (3) vorgesehen ist, um das Zugrad (1) an einem Rad zu befestigen, das an der Achse des Fahrezugs befestigt ist.

3. Zugrad nach Anspruch 2, dadurch gekennzeichnet, daß das Mittelstück (13) in einer vertikalen Ebene relativ zum Zugradrahmen (6) bewegbar ist, wobei das Mittelstück (13) vertikal nach unten in eine Position bewegbar ist, in der die Greifer (11) sich über die Kante des Fahrzeugrades an seinem Boden hinaus erstrecken, und vertikal nach oben in eine Position bewegbar ist, in der die Greifer (11) über die Kante des Fahrzeugrades an seinem Boden hinweg zurückgezogen sind.

4. Zugrad nach Anspruch 3, dadurch gekennzeichnet, daß das Mittelstück (13) vertikal nach oben in eine Position bewegbar ist, in der die Greifer (11) am Boden des Fahrzeugradrahmens zu dessen Kante zurückgezogen sind.

5. Zugrad nach Anspruch 2, 3 oder 4, dadurch gekennzeichnet, daß die Einrichtung zur Befestigung des Zugrades am Fahrzeugrad eine Schraubbolzenanordnung (4, 5, 8 und 9) aufweist.

6. Zugrad nach Anspruch 5, dadurch gekennzeichnet, daß die Schraubbolzenanordnung einen Schraubenbügel (4) aufweist, wobei in das eine Ende von diesem ein Schraubbolzen (5) eingreift, um den Zugradrahmen (6) daran zu befestigen, und in das andere Ende von diesem der Gewindebereich einer Stange eingreift, der mit der Fahrzeugradnabe in Eingriff steht, um den Zugradrahmen am Fahrzeugrad zu befestigen.

7. Zugrad nach Anspruch 6, dadurch gekennzeichnet, daß der Betrag des Gewindebereiches der Stange (8), der mit dem Schraubenbügel (4) in Eingriff steht, einstellbar ist, so daß der Abstand zwischen dem Zugrad (1) und der Radnabe einstellbar ist, damit er auf verschiedene Radfelgenbreiten einzustellen ist.

8. Zugrad nach Anspruch 6 oder 7, dadurch gekennzeichnet, daß eine Spannplatte (9) in einer Position zwischen der Stange (8) und der Felge (10) des Fahrzeugrades festgezogen ist, um Kräfte in dem Zugrad (1) auf das Fahrzeugrad zu übertragen.

9. Zugrad nach Anspruch 5, dadurch gekennzeichnet, daß die Schraubbolzenanordnung (4, 5, 8, und 9) eine Schraubbolzen aufweist, der mit der Fahrzeugradnabe und dem Zugradrahmen (6) in Eingriff steht, um sie aneinander zu befestigen, und daß Abstandshalter über die Länge des Schraubbolzens vorgesehen sind, damit sich der Abstand zwischen dem Zugrad und der Radnabe auf verschiedene Radfelgenbreiten einstellen läßt.

10. Zugrad nach Anspruch 9, dadurch gekennzeichnet, daß eine Spannplatte (9) in einer Position gegen die Felge (10) des Fahrzeugrades mit Schraubbolzen angezogen ist, um Kräfte in den Bolzen auf das Fahrzeugrad zu übertragen.

11. Zugrad nach Anspruch 1, dadurch gekennzeichnet, daß eine Einrichtung vorgesehen ist, um den Zugradrahmen (6) an der Achse des Fahrzeugs derart zu befestigen, daß der Rahmen als ein Rad wirkt, auf dem das Fahrzeug läuft.

12. Zugrad nach Anspruch 11, dadurch gekennzeichnet, daß das Mittelstück (13) in einer vertikalen Ebene relativ zum Zugradrahmen (6) bewegbar ist, wobei das Mittelstück (13) vertikal nach unten in eine Position bewegbar ist, in der die Greifer (11) sich über die Kante des Zugradrahmens (6) an seinem Boden hinaus erstrekken, und vertikal nach oben in eine Position bewegbar ist, in der die Greifer (11) über die Kante des Zugradrahmens (6) an seinem Boden hinweg zurückgezogen sind.

13. Zugrad nach Anspruch 11 oder 12, dadurch gekennzeichnet, daß der Zugradrahmen (6) mit einem Reifen versehen ist, um für eine Stoßdämpfung zu sorgen.

14. Zugrad nach einem der vorherigen Ansprüche, dadurch gekennzeichnet, daß der Zugradrahemn (6) eine Einrichtung (25, 26 und 27) aufweist, um Drehmomentkräfte auf die Greifer (11) weg von dem zentralen Lager (13) auf die Einrichtung (3) zur Verbindung des Zugrades (1) mit dem Fahrzeug zu übertragen.

15. Zugrad nach einem der vorherigen Ansprüche, dadurch gekennzeichnet, daß das auf Rollen (20) gelagerte Teil (18) ein mehrarmiges Teil ist, wobei die Rollen (20) von entsprechenden Armen (19) des mehrarmigen Teiles gelagert sind.

16. Zugrad nach Anspruch 15, dadurch gekennzeichnet, daß das mehrarmige Teil (18) mittels einer Zugstange (19a), die zwischen dem mehrarmigen Teil (18) und einem stationären Teil des Fahrzeugs angebracht ist, daran gehindert ist, sich mit dem Zugradrahmen (6) zu drehen.

17. Zugrad nach Anspruch 16, dadurch gekennzeichnet, daß ein Scherbolzen die Zugstange (19a) mit dem stationären Teil des Fahrzeugs oder mit dem mehrarmigen Teil verbindet, wobei der Scherbolzen in dem Augenblick abscheren kann, wo das mehrarmige Teil blokkiert und somit gezwungen wird, sich mit dem Zugradrahmen zu bewegen.

18. Zugrad nach Anspruch 17, dadurch gekennzeichnet, daß Antriebsmittel (16) vorgesehen sind, um die Bewegung des Mittelstücks zu steuern, wobei die Antriebsmittel (16) mit einer Verbindungseinrichtung mit einer Antriebsmittelbetätigungsversorgung außerhalb des Zugrades (1) verbunden sind, wobei die Verbindungseinrichtung mit einer Drehverbindung versehen ist, die im Zentrum des Zugrades (1) montiert ist, damit sich die Antriebsmittel mit dem Zugradrahmen (6) in dem Augenblick drehen können, wo die Blockierung erfolgt, ohne die Verbindungseinrichtung zu beschädigen.

19. Zugrad nach Anspruch 16, 17 oder 18, dadurch gekennzeichnet, daß die Verbindungseinrichtung ein Rohr aufweist, durch welches die Versorgung für die Antriebsmittel erfolgt.

20. Zugrad nach einem der vorherigen Ansprüche, dadurch gekennzeichnet, daß jeder Greifer (11) mit einem Verbindungsteil (12) verbunden ist, das drehbar mit dem Mittelstück (13) verbunden ist, wobei eine Gelenkverbindung (23) zwischen jedem Greifer (11) und seinem jeweiligen Verbindungsteil (12) vorgesehen ist.

21. Zugrad nach Anspruch 20, dadurch gekennzeichnet, daß jede Gelenkverbindung (23) einen Scherbolzen aufweist, um das Zugrad (1) gegen übermäßige Kräfte auf den Greifer (11) zu schützen.

22. Zugrad nach einem der vorherigen Ansprüche, dadurch gekennzeichnet, daß jeder Greifer (11) verschiebbar in einem Kanalteil (24) des Zugradrahmens (6) gelagert ist.

23. Zugrad nach einem der vorherigen Ansprüche, dadurch gekennzeichnet, daß das Mittelstück (13) mit einem Hydraulikkolben (16) bewegbar ist.

## Revendications

1. Roue de tracteur (1) à crampons comprenant une carcasse (6), une pluralité de crampons (11), des moyens pour allonger et rétracter sélectivement lesdits crampons (11) par rapport au bord de la carcasse (6) de la roue à crampons, et des moyens (3) pour relier la roue (1) à crampons à un véhicule de façon que le centre de rotation de la carcasse (6) de la roue à crampons recouvre le centre de rotation de l'essieu du véhicule, lesdits moyens pour allonger et rétracter sélectivement lesdits crampons (11) comprenant un élément central (13) auquel les crampons (11) sont reliés en rotation, l'élément central (13) étant mobile par rapport au centre de rotation de la carcasse (6) de la roue à crampons pour constituer un centre de rotation pour les crampons (11) qui est décalé par rapport au centre de rotation de la carcasse (6) de la roue à cramons, caractérisée en ce que l'élément central (13) est monté sur un élément (18), et qu'il est mobile par rapport à cet élément (18) porté par des galets (20) s'appuyant sur une surface annulaire définie par la carcasse de la roue, et que des moyens sont prévus pour empêcher l'élément (18) de tourner avec la roue à crampons.

2. Roue à crampons selon la revendication 2, caractérisée en ce que l'élément central (13) est mobile dans un plan vertical par rapport à la carcasse (6) de la roue à crampons, l'élément central (13) étant mobile verticalement vers le bas jusqu'à une position dans laquelle les crampons (11) s'étendent au-delà du bord de la roue du véhicule à la partie la plus basse de celle-ci, et qu'il est mobile verticalement vers le haut jusqu'à une position dans laquelle les crampons (11) se rétractent au-delà le bord de la roue du véhicule à la partie la plus basse de celle-ci.

4. Roue à crampons selon la revendication 3, caractérisée en ce que l'élément central (13) est mobile verticalement vers le haut jusqu'à une position dans laquelle les crampons (11) à la partie la plus basse de la carcasse de la roue à crampons sont rétractés jusqu'au bord de cette roue.

5. Roue à crampons selon la revendication 2, 3 ou 4, caractérisée en ce que les moyens (3) pour fixer la roue à crampons à la roue du véhicule sont constitués d'un assemblage à boulons (4, 5, 8 et 9).

6. Roue à crampons selon la revendication 5, caractérisée en ce que l'assemblage à boulons comprend une tige filetée (4) dont une extrêmité reçoit un boulon (5) pour y fixer la carcasse (6) de la roue à crampons et dont l'autre extrêmité reçoit la partie filetée d'une tige avec laquelle le moyeu de la roue du véhicule est en liaison pour fixer la carcasse de la roue à crampons à la roue du véhicule.

7. Roue à crampons selon la revendication 6, caractérisée en ce que la longueur de la partie filetée de ladite tige (8) pénétrant dans la tige filetée (4) est ajustable pour permettre de régler la distance entre la roue (1) à crampons et le moyeu de la roue en fonction de différentes largeurs de la jante de roue.

8. Roue à crampons selon la revendication 6 ou 7, caractérisée en ce qu'une plaque de tension (9) est serrée en position entre ladite tige (8) et la jante (10) de la roue du véhicule pour transmettre des forces de la roue (1) à crampons à la roue du véhicule.

9. Roue à crampons selon la revendication 5, caractérisée en ce que l'assemblage à boulons (4, 5, 8 et 9) comprend un boulon qui est en liaison avec le moyeu de la roue du véhicule et la carcasse (6) de la roue à crampons pour les fixer l'un à l'autre, et que des écarteurs sont prévus suivant la longueur du boulon pour permettre de régler la distance entre la roue à crampons et le moyeu de roue en fonction de différentes largeurs de la jante de roue.

10. Roue à crampons selon la revendication 9, caractérisée en ce qu'une plaque de tension (9) est serrée en position contre la jante (10) de la roue du véhicule par des boulons pour transmettre des forces depuis les boulons à la roue du véhicule.

11. Roue à crampons selon la revendication 1, caractérisée en ce que des moyens sont prévus pour fixer la carcasse (6) de la roue à crampons à l'essieu du véhicule de façon que la carcasse agisse sur une roue sur laquelle le véhicule roule.

12. Roue à crampons selon la revendication 11, caractérisée en ce que l'élément central (13) est mobile dans un plan vertical par rapport à la carcasse (6) de la roue à crampons, l'élément central (13) étant mobile verticalement vers le bas jusqu'à une position dans laquelle les crampons (11) s'étendent au-delà du bord de la roue du véhicule (6) à la partie la plus basse de celle-ci, et qu'il est mobile verticalement vers le haut jusqu'à une position dans laquelle les crampons (11) se rétractent au-delà du bord de la roue du véhicule à la partie la plus basse de celli-ci.

13. Roue à crampons selon la revendication 11 ou 12, caractérisée en ce que la carcasse (6) de la roue à crampons est munie d'un pneu pour produire une résistance aux chocs.

14. Roue à crampons selon l'une quelconque des revendications précédentes, caractérisée en ce que la carcasse (6) de la roue à crampons comprend des moyens (25, 26 et 27) pour transmettre des forces de torsion des crampons (11) éloignés du palier central (13) aux moyens (13) pour relier la roue (1) à crampons au véhicule.

15. Roue à crampons selon l'une quelconque des revendications précédentes, caractérisée en ce que l'élément (18) porté par les galets (20) est un élément aux bras multiples, les galets étant portés par les bras respectifs (19) de l'élément aux bras multiples.

16. Roue à crampons selon la revendication 15, caractérisée en ce que la rotation de l'élément aux bras multiples (18) avec la carcasse (6) de la roue à crampons est empêchée par une barre d'accouplement (19a) attachée entre l'élément aux bras multiples (18) et une partie fixe du véhicule.

17. Roue à crampons selon la revendication 16, caractérisée en ce qu'un goujon de cisaillement relie la barre d'accouplement (19a) à la partie fixe du véhicule ou à l'élément aux bras multiples, ce goujon de cisaillement pouvant cisailler dans le cás où l'élément aux bras multiples est grippé et ainsi forcé à se déplacer avec la carcasse de la roue à crampons.

18. Roue à crampons selon la revendication 17, caractérisée en ce que des moyens moteurs (16) sont prévus pour commander le déplacement de l'élément central, les moyens moteurs (16) étant reliés à un moyen moteur fournissant l'alimentation à l'extérieur de la roue (1) à crampons à l'aide de moyens de raccordement, ces moyens de raccordement étant munis d'un raccord pivotant monté au centre de la roue (1) à crampons, pour permettre aux moyens moteurs de tourner avec la carcasse (6) de la roue à crampons dans le cas où ils seraient grippés, sans endommager les moyens de raccordement.

19. Roue à crampons selon la revendication 16, 17 ou 18, caractérisée en ce que les moyens de raccordement comprennent un tuyau à travers lequel est effectuée l'alimentation des moyens moteurs.

20. Roue à crampons selon l'une quelconque des revendications précédentes, caractérisée en ce que chaque crampon (11) est relié à un élément de jonction (12) qui est relié en pivotement à l'élément central (13), un joint articulé (23) étant prévu entre chaque crampon (11) et son élément de jonction (12) correspondant.

21. Roue à crampons selon la revendication 20, caractérisée en ce que chaque joint articulé (23) comprend un goujon de cisaillement pour protéger la roue (1) à crampons des forces excessives appliquées sur les crampons (11).

22. Roue à crampons selon l'une quelconque des revendications précédentes, caractérisée en ce que chaque crapon (11) est monté en coulissement dans un élément de conduit (24) de la carcasse (6) de la roue à crampon.

23. Roue à crampons selon l'une quelconque des revendications précédentes, caractérisée en ce que l'élément central (13) est actionné à l'aide d'un piston hydraulique (16).

FIG. I

FIG . 2